# EUROPÄISCHE PATENTSCHRIFT

(11) **EP 2 092 745 B1**
(45) Veröffentlichungstag und Bekanntmachung des Hinweises auf die Patenterteilung: **06.10.2010**
(21) Anmeldenummer: 07825659.1
(22) Anmeldetag: 14.11.2007
(51) Int. Cl.: H04N 7/167, H04N 7/173

(54) **VERFAHREN ZUM SENDEN VON VIDEODATEIEN IN EINEM DATENNETZ**
METHOD FOR TRANSMITTING VIDEO FILES IN A DATA NETWORK
PROCÉDÉ D'ENVOI DE FICHIERS VIDÉO DANS UN RÉSEAU DE DONNÉES

(30) Priorität: 20.11.2006 AT 19152006
(43) Veröffentlichungstag der Anmeldung: 26.08.2009
(73) Patentinhaber: Ocilion IPTV Technologies GmbH, 4910 Ried (AT)
(72) Erfinder: KUEHBERGER, Johann, 4912 Neuhofen (AT)
(74) Vertreter: Burgstaller, Peter
(86) Internationale Anmeldenummer: PCT/IB2007/003481
(87) Internationale Veröffentlichungsnummer: WO 2008/062271

(56) Entgegenhaltungen:
- WO-A-00/44119
- WO-A-02/067548
- DE-A1- 10 257 159
- JP-A- 11 112 950
- US-A- 5 999 629

## Beschreibung

Die Erfindung betrifft ein Verfahren zum Senden von Videodateien in einem Datennetz. Das erfindungsgemäße Verfahren ist insbesondere für die Echtzeit-Übertragung von Fernsehsendungen über ein digitales Datennetz vorteilhaft anwendbar. Ein typischer Anwendungsfall ist IPTV (Internet Protocol Television).

Beim sogenannten "Streaming Video" werden Videodaten in einem Datennetz so übertragen, dass sie an empfängerseitigen Endgeräten sofort wiedergegeben werden können. Neben der terrestrischen Übertragung, der Satellitenübertragung und dem Kabelfernsehen steht damit ein weiterer Übertragungsweg für Fernsehsendungen zur Verfügung.

Empfängt ein Dienstanbieter das durch die Rundfunkanstalt gesendete Fernsehsignal, transformiert es in Echtzeit in ein bestmöglich komprimiertes digitales Videoformat, speist es sofort als sogenannten Stream in das Datennetz ein ohne es selbst weiter zu speichern, so kann der empfängerseitig mit einem entsprechenden Endgerät ausgestattete Benutzer die Fernsehsendung dann und nur dann empfangen, wenn er zur Zeit der Ausstrahlung sein Empfangsgerät eingeschaltet, angeschlossen und entsprechend empfangsbereitet geschaltet hat. Damit gelten für den Dienstanbieter rechtlich im wesentlichen die gleichen Rahmenbedingungen wie für Betreiber eines Kabelfernsehnetzes. Neben der sofortigen Wiedergabe von Videodaten gibt es auch die Möglichkeit der Aufzeichnung und späteren Wiedergabe. Übliche Verfahren dafür werden mit "Personal Video Rekorder" oder "Timeshift" bezeichnet. Dabei werden Sendungen nach Programmierung durch den Benutzer entweder ab einem bestimmten Zeitpunkt und für eine bestimmte Dauer aufgezeichnet oder es erfolgt in einem ringförmig angeordneten Speicher ein zeitlich begrenzter oder auch zeitlich nicht begrenzter aber jederzeit stoppbarer Aufzeichnungsvorgang, wobei ältere Inhalte automatisch immer wieder überschrieben werden und somit eine gewisse Zeit rückwärts (z.B. 24 Stunden) der Inhalt jederzeit zur Verfügung steht. Diese Anwendungen sind insbesondere für den Benutzer attraktiv, wenn mehrere Sendungen gleichzeitig aufgezeichnet werden können, und zu einem späteren Zeitpunkt jeweils ein Teil davon wiedergegeben werden kann. Ein sehr wesentliches Problem bei dieser Art der Fernsehübertragung liegt in der begrenzten Übertragungskapazität der zu den einzelnen Benutzern führenden Datenleitungen. Aus diesem Grund ist es für sehr viele Benutzer unmöglich, mehrere Fernsehsendungen gleichzeitig zu empfangen; manchmal kann auch eine einzige Sendung nicht richtig in Echtzeit übertragen werden. Anders als beispielsweise beim Kabelfernsehen kann der Benutzer also auf Grund der Schwächen des Übertragungsnetzes nur einen kleinen Teil der angebotenen und legal erhältlichen Filme speichern. In der Regel ist der Benutzer damit nicht in der Lage, gleichzeitig Sendungen live anzusehen und/oder mehrere andere Sendungen bei sich aufzuzeichnen und später wiederzugeben.

Beim sogenannten "Video on Demand" werden Videodateien auf einem Server bereitgestellt und zu einem beliebig wählbaren Zeitpunkt auf Abruf durch einen Benutzer an diesen übertragen. Damit kann der oben beschriebene Engpass überwunden werden, da damit mehrere Filme zeitlich hintereinander übertragen werden können und nicht zwangsweise gleichzeitig übertragen werden müssen. Allerdings stellt damit der Serverbetreiber die Videodatei in nicht-privater Weise zur Vervielfältigung zur Verfügung. Das ist im allgemeinen nur nach ausdrücklicher Erlaubnis durch den Inhaber der Urheberrechte erlaubt.

Ein derartiges Verfahren ist aus JP 11112950 bekannt.

Die der Erfindung zu Grunde liegende Aufgabe besteht darin, eine Methode zum Übertragen von Videodateien über ein Datennetz bereitzustellen. Die Verfügbarkeit der Videodateien für den Dienstanbieter und den Benutzer soll so sehr an die Gegebenheiten beim Kabelfernsehen und bei der privaten Aufzeichnungen per Videorekorder anpassbar sein, dass dafür auch die gleichen rechtlichen Rahmenbedingungen zum Greifen kommen können. Auch solche Benutzer, welchen nur eine Datenleitung mit relativ geringer Übertragungskapazität zur Verfügung steht, sollen damit mehrere gleichzeitig ausgesendete Videos aufnehmen können.

Die Aufgabe wird gelöst, indem der Dienstanbieter jenen Benutzern, welche einzelne Sendungen empfangen wollen und dafür auch während der Sendungsdauer ihre zugehörigen Endgeräten angeschlossen und empfangsbereit geschaltet haben, einen Zwischenspeicherplatz für jene Daten zur Verfügung stellt, welche die Benutzer zwar abrufen wollen, aber auf Grund der mangelnden Übertragungskapazität nicht abrufen können. Beim Dienstanbieter werden diese Daten ausschließlich in verschlüsselter Form gespeichert. An den Benutzer wird nur während der Dauer der Sendung über das Datennetz die zum Entschlüsseln dieser Daten erforderliche Information gesandt. Beim Dienstanbieter wird diese zum Entschlüsseln erforderliche Information nicht gespeichert. Zu einem späteren Zeitpunkt, an dem es die Auslastung der zwischen Benutzer und Internetdienstanbieter wirkenden Datenleitungen zulässt, kann der Benutzer mit Hilfe der in seinem Besitz befindlichen, zum Entschlüsseln erforderlichen Information, die gespeicherte, verschlüsselten Informationen abrufen und wieder zu einer abspielbaren Videodatei zusammenfügen.

Bezüglich der Verfügbarkeit der zum Erhalt einer abspielbaren Videodatei erforderlichen Daten ist damit die Situation nach der Ausstrahlung einer Sendung die gleiche, als hätte der Benutzer die ihm gehörende Videodatei auf einem von ihm physisch entfernt angeordneten, nur ihm über das Datennetz zugänglichen Speicherplatz abgelegt.

Die Erfindung wird an Hand einer Zeichnung detaillierter erläutert.

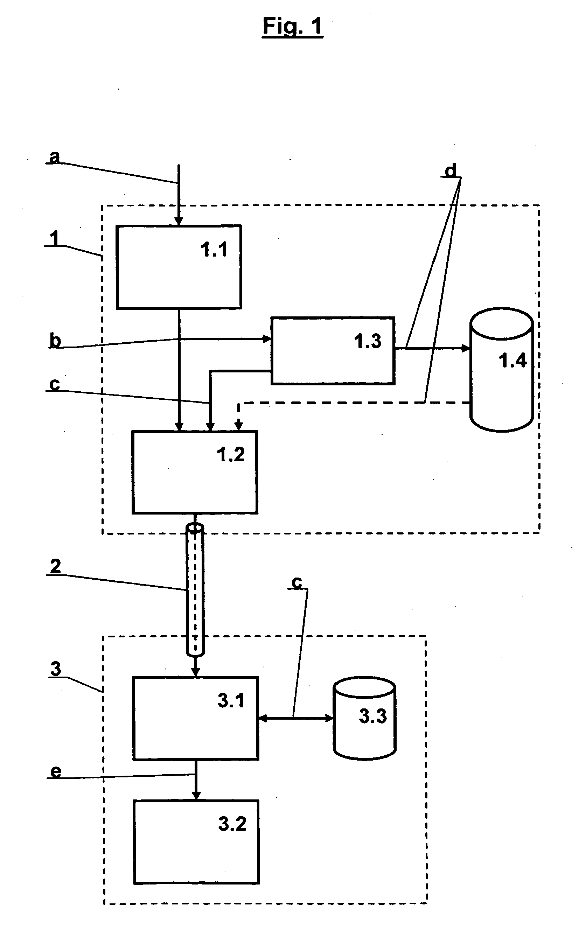

Fig. 1: zeigt ein Ablaufdiagramm des erfindungsgemäßen Verfahrens.

Das live empfangene Fernsehsignal a wird in dem im Bereich 1 des Dienstanbieters befindlichen Schnittstellengerät 1.1 in Echtzeit in unverschlüsselte Videodaten b umgewandelt. Das Schnittstellengerät 1.1 ist ein elektronisches Gerät mit entsprechender schneller Datenverarbeitung; derartige Geräte werden jetzt schon für das eingangs beschriebene Streaming-Video-Verfahren angewendet.

Für die Live-Wiedergabe von Fernsehsendungen wird entsprechend dem üblichen Stand der Technik bei IPTV vorgegangen: Die zu übertragende Sendung wird vom Benutzer 3 an seiner sogenannten Settopbox 3.1 ausgewählt und durch diese vom Frontendserver 1.2 angefordert. Der Frontendserver 1.2 sendet daraufhin in Echtzeit die entsprechenden unverschlüsselten Videodaten b über die Datenleitungen 2 des Datennetzes an die Settopbox 3.1. Die Settopbox 3.1 wandelt die so empfangenen Daten in das für die Wiedergabe am TV-Gerät 3.2 passende Eingangssignal um. Wie bei einem Videorekorder können die unverschlüsselten Videodaten auf Seiten des Benutzers auch aufgenommen und später wiedergegeben werden.

Für die zeitversetzte Wiedergabe kann auch entsprechend dem erfindungsgemäßem Verfahren vorgegangen werden. Im Fall von zu sehr beschränkter Übertragungskapazität der Datenleitungen 2 - etwa dann, wenn mehrere Filme gleichzeitig gesendet und übertragen werden müssten - kann nur entsprechend dem erfindungsgemäßen Verfahren vorgegangen werden:
Ein Aufzeichnungsauftrag wird durch den Benutzer - wie bei einem herkömmlichen Videorekorder - an der Settopbox 3.1 eingegeben. Die Settopbox leitet über die Datenleitungen 2 und den Frontendserver 1.2 die entsprechende Anforderung an die Geräte des Dienstanbieters weiter. Zum Zeitpunkt der entsprechenden Sendung werden im Bereich 1 des Dienstanbieters die entsprechenden unverschlüsselten, umfangreichen Videodaten b im Verschlüsselungsprogrammmodul 1.3 einerseits in gleichermaßen umfangreiche verschlüsselte Daten d umgewandelt, anderseits in wesentlich weniger umfangreiche Schlüsseldaten c, mit Hilfe derer die verschlüsselten Daten d später wieder entschlüsselt werden können. Die umfangreichen verschlüsselten Daten d werden in einem durch den Dienstanbieter beschreibbaren Datenspeicher 1.4 im Bereich 1 des Dienstanbieters - also ohne Übertragung über die Datenleitungen 2 - abgelegt. Die wesentlich weniger umfangreichen Schlüsseldaten c werden durch den Frontendserver 1.2 des Dienstanbieters über die Datenleitungen 2 an die Settopbox 3.1 des Benutzers gesandt und durch diese im Datenspeicher 3.3 im Bereich 3 des Benutzers abgelegt. Da die Schlüsseldaten sehr viel weniger umfangreich sind als die zugehörigen verschlüsselten oder unverschlüsselten Videodaten, können gleichzeitig Schlüsseldaten zu vielen verschiedenen Sendungen auch über Datenleitungen 2 mit relativ geringer Übertragungskapazität gesendet werden. Die Schlüsseldaten c werden im Bereich 1 des Dienstanbieters nur generiert, aber nicht gespeichert. Das heißt im Bereich des Dienstanbieters bleiben nur die verschlüsselten Daten d. Mit diesen kann er mangels der zum Entschlüsseln erforderlichen Information nichts anfangen.

Sobald es die Auslastung der Datenleitungen 2 zulässt, können auf Anforderung durch die Settopbox 3.1 des Benutzers die verschlüsselten Daten d aus dem im Bereich des Dienstanbieters befindlichen Datenspeicher 1.4 ausgelesen und über die Datenleitungen 2 zur Settopbox 3.1 des Benutzers gesandt werden. Dort werden sie mit den Schlüsseldaten c, welche zum Zeitpunkt der Sendung in Echtzeit im Bereich 3 des Benutzers in einem Datenspeicher 3.3 gespeichert werden mussten, entschlüsselt. Sie können nun in herkömmlicher Weise am TV-Gerät 3.2 wiedergegeben und/oder wie bei einem herkömmlichen Videorekorder zwecks späterer Wiedergabe in unverschlüsselter Form gespeichert werden.

Es gibt eine Vielzahl von bekannten, computerbasierten Verschlüsselungsverfahren, mit Hilfe derer in Echtzeit aus den Videodaten b verschlüsselte Daten d und Schlüsseldaten c gewonnen werden können aus denen ohne Informationsverlust wieder die ursprünglichen Daten zusammengefügt werden können, wobei die Schlüsseldaten c sehr viel weniger umfangreich sind als die ursprünglichen Daten und wobei die verschlüsselten Daten ohne die Kenntnis der konkreten Schlüsseldaten mit vernünftigem Aufwand nicht zu entschlüsseln sind. Deshalb wird hier auf das Ver- und Entschlüsselungsverfahren nicht weiter eingegangen. Von rechtlicher Bedeutung ist, dass sich die einzelnen Teilpakete der Schlüsselinformation immer nur auf kleine Teilpakete der verschlüsselten Daten beziehen müssen, sodass sichergestellt ist, dass der Benutzer für den Erhalt der kompletten Sendung auch die komplette Sendezeit lang die Schlüsselinformation empfangen muss.

Manche der im folgenden erwähnten Variationen des erfindungsgemäßen Verfahrens sind in Abhängigkeit von den im jeweiligen Gebiet geltenden rechtlichen Rahmenbedingungen mehr oder weniger sinnvoll:
Man kann zu jeder unverschlüsselt im Datennetz übertragenen Sendung automatisch auch einen Satz verschlüsselter Daten d anlegen und speichern und die entsprechende Schlüsselinformation c mit den unverschlüsselten Daten mitsenden. Wenn der Benutzer diese Schlüsselinformation auch speichert, so kann er im Fall von Auslastungsschwankungen durch welche die Live-Übertragung unterbrochen wird die Sendung zumindest später vollständig erhalten.

Man kann für eine Sendung einen einzigen verschlüsselten Datensatz und eine für alle Benutzer gleiche Schlüsselinformation bereitstellen, oder beide Informationspakete für jeden einzelnen Benutzer individuell herstellen. Auf Grund des geringeren Speicherplatzbedarfes beim Dienstanbieter ist die erste Variante technisch vorteilhaft. In Bezug auf die Nutzbarkeit des beim Dienstanbieter befindlichen Datenspeichers ist die zweite Variante dem gängigen Modell für ausgelagerten Speicherplatz ähnlicher.

Man kann die Lesemöglichkeit für die beim Dienstanbieter gespeicherten verschlüsselten Daten d von der Identität des Lesenden abhängig machen, beispielsweise indem beim Dienstanbieter mit den verschlüsselten Daten auch eine Geräteidentifikationsnummer der Settopbox abgespeichert wird. Damit kann erreicht werden, das durch die an sich einfache Weitergabe der wenig umfangreichen Schlüsselinformation durch den Benutzer an einen unberechtigten Dritten, nicht automatisch die Nutzbarkeit der verschlüsselten Information mitgegeben wird. Für den Benutzer ist es vorteilhafter wenn diese Einschränkung nicht angewendet wird, wenn also die Schlüsselinformation unabhängig von der Identität des Verwenders funktioniert. Er kann dann damit de facto das Video in Form von wesentlich weniger Daten vollständig an Dritte weitergeben, als dies mit der herkömmlichen Weitergabe von unverschlüsselten Videodaten möglich wäre. Die Übergabe ist damit zeitlich weniger aufwendig und sie kann mittels kleinvolumigerer Datenträger erfolgen.

Man kann die Lesemöglichkeit für die beim Dienstanbieter gespeicherte verschlüsselten Daten d auch zeitlich auf eine bestimmte Dauer nach der Sendung einschränken. Diese Dauer kann für verschiedene Kunden entsprechend der Kapazität der zu ihnen führenden Datenverbindung sowie der Kapazität des vom Dienstanbieter zur Verfügung gestellten Datenspeichers 1.4 verschieden lang sein.

Man kann die Anzahl der möglichen Lesevorgänge in den beim Dienstanbieter gespeicherten verschlüsselten Daten d beschränken.

Mit dem in dieser Beschreibung verwendeten Begriff "Datennetz" ist ein Netz gemeint, in welchem Daten übertragen werden. Dabei ist es egal auf welcher konkreten Technologie wie beispielsweise Glasfaser, DSL, Koaxialkabel, Funk etc. die Übertragung funktioniert. In diesem Sinne ist auch das Internet als Datennetz zu verstehen.

Mit dem Begriff Settopbox ist das benutzerseitige Endgerät an den Datenleitungen gemeint, welches den Strom der Videodaten und der Schlüsselinformationen entgegennimmt. Dabei ist es egal wie dieses Gerät physisch ausgebildet ist. Es kann beispielsweise ein eigenständiges elektronisches Gerät mit leistungsfähiger Datenverarbeitung sein, oder ein Programmmodul eines Computers, welcher im Übrigen auch für andere Anwendungen herangezogen werden kann.

## Patentansprüche

1. Verfahren zum Senden von Videodateien über ein Datennetz von einem Dienstanbieter an mindestens einen entfernt davon angeordneten Benutzer, wobei während der Sendedauer
I. im Bereich (1) des Dienstanbieters aus den unverschlüsselten Videodaten (b) mit Mitteln der automatisierten Datenverarbeitung verschlüsselte Daten (d) und zum Entschlüsseln derselben notwendige und hinreichende Schlüsseldaten (c) erstellt werden,
II. die verschlüsselten Daten (d) im Bereich des Dienstanbieters gespeichert werden,
III. die Schlüsseldaten (c) an den Benutzer übertragen und bei diesem gespeichert werden,
und wobei die verschlüsselten Daten (d) zu einem späteren Zeitpunkt zum Bereich (3) des Benutzers gesandt und dort mit Hilfe der Schlüsseldaten (c) entschlüsselt werden,
**dadurch gekennzeichnet, dass**
während der Sendedauer, also parallel zu den Verfahrenschritten I, II und III, unverschlüsselte Videodaten versandt werden.

2. Verfahren nach Anspruch 1, **dadurch gekennzeichnet, dass** das Erstellen von verschlüsselte Daten (d) und Schlüsseldaten (c) während der Sendedauer annähernd kontinuierlich erfolgt, indem aus zeitlich aufeinander folgenden kleinen Teilpaketen der Videodaten (b) zeitlich aufeinander folgend Teilpakete der verschlüsselten Daten (d) und der Schlüsseldaten (c) erstellt werden.

3. Verfahren nach Anspruch 1 oder 2, **dadurch gekennzeichnet, dass** die Schlüsseldaten (c) im Bereich des Dienstanbieters nach der Versendung an den Benutzer gelöscht bzw. überschrieben werden.

4. Verfahren nach einem der vorangegangenen Ansprüche, **dadurch gekennzeichnet, dass** verschlüsselte Daten (d) und Schlüsseldaten (c) für jeden einzelnen Benutzer individuell generiert werden.

5. Verfahren nach einem der Ansprüche 1 bis 3, **dadurch gekennzeichnet, dass** ein einziger Satz von verschlüsselter Daten (d) und von Schlüsseldaten (c) für eine Mehrzahl von Benutzern gemeinsam generiert wird.

6. Verfahren nach einem der vorangegangenen Ansprüche, **dadurch gekennzeichnet, dass** die Lesemöglichkeit für die beim Dienstanbieter gespeicherten verschlüsselten Daten (d) von der Identität des Lesenden abhängig gemacht wird, beispielsweise indem das Versenden der Schlüsseldaten (c) an den Erhalt und das Speichern einer Geräteidentifikationsnummer der empfangenden Settopbox (3.1) gekoppelt ist und indem das Lesen der verschlüsselten Daten (d) an den Erhalt einer Geräteidentifikationsnummer der empfangenden Settopbox (3.1) und an deren Übereinstimmung mit der gespeicherten Geräteidentifikationsnummer gekoppelt ist.

7. Verfahren nach einem der Ansprüche 1 bis 5, **dadurch gekennzeichnet, dass** die Funktion der Schlüsseldaten (c) unabhängig von der Identität des Verwenders funktioniert.

8. Verfahren nach einem der vorangegangenen Ansprüche, **dadurch gekennzeichnet, dass** die Lesemöglichkeit für die beim Dienstanbieter gespeicherte verschlüsselten Daten (d) zeitlich auf eine bestimmte Dauer nach der Sendung eingeschränkt ist.

9. Verfahren nach einem der vorangegangenen Ansprüche, **dadurch gekennzeichnet, dass** die Anzahl der möglichen Lesevorgänge in den beim Dienstanbieter gespeicherten verschlüsselten Daten (d) eingeschränkt ist.

10. Verfahren nach einem der vorangegangenen Ansprüche, **dadurch gekennzeichnet, dass** es zur Echtzeit-Übertragung von Fernsehsendungen über ein digitales Datennetz angewendet wird.

## Claims

1. Method for sending video files via a data network from a service provider to at least one remote user, wherein, during the sending period
I. encrypted data (d) and key data (c) which is required and sufficient for decrypting the said encrypted data is created using automated data processing means from the unencrypted video data (b) in the region (1) of the service provider,
II. the encrypted data (d) is stored in the region of the service provider,
III. the key data (c) is transmitted to the user and stored at the user,
and wherein the encrypted data (d) is sent to the region (3) of the user at a later time and decrypted there with the aid of the key data (c),
**characterised in that**
during the sending period, that is, in parallel with the method steps I, II and III, unencrypted video data is sent.

2. Method according to Claim 1, **characterised in that** the creation of encrypted data (d) and key data (c) takes place virtually continuously during the sending period, **in that** successive partial packets of the encrypted data (d) and of the key data (c) are created from successive small partial packets of the video data (b).

3. Method according to Claim 1 or 2, **characterised in that** the key data (c) is deleted or overwritten in the region of the service provider after being sent to the user.

4. Method according to one of the preceding claims, **characterised in that** encrypted data (d) and key data (c) is generated individually for each individual user.

5. Method according to one of Claims 1 to 3, **characterised in that** a single set of encrypted data (d) and of key data (c) is generated together for a plurality of users.

6. Method according to one of the preceding claims, **characterised in that** the possibility of reading the encrypted data (d) which is stored at the service provider is made dependent on the identity of the reader, for example **in that** the sending of the key data (c) is coupled to the receipt and storage of a device identification number of the receiving set top box (3.1) and **in that** the reading of the encrypted data (d) is coupled to the receipt of a device identification number of the receiving set top box (3.1) and to the correspondence of the latter with the stored device identification number.

7. Method according to one of Claims 1 to 5, **characterised in that** the function of the key data (c) functions regardless of the identity of the user.

8. Method according to one of the preceding claims, **characterised in that** the possibility of reading the encrypted data (d) which is stored at the service provider is limited in time to a certain period after sending.

9. Method according to one of the preceding claims, **characterised in that** the number of possible reading operations is limited in the encrypted data (d) which is stored at the service provider.

10. Method according to one of the preceding claims, **characterised in that** it is used for real-time transmission of television programmes via a digital data network.

## Revendications

1. Procédé destiné à l'envoi de fichiers vidéo par le biais d'un réseau de données par un prestataire de services à au moins un utilisateur situé à distance, sachant qu'au cours de la durée de transmission
I. Dans le domaine (1) du prestataire de services, des données cryptées (d) ainsi qu'en vue du décryptage de ces dernières, le nombre suffisant de clés (c), sont générées à partir des données vidéo non cryptées (b) avec les méthodes du traitement automatique des données
II. les données cryptées (d) sont enregistrées dans le domaine du prestataire de services,
III. les clés (c) sont transmises à l'utilisateur et enregistrées chez lui,
en sachant que les données cryptées (d) sont envoyées ultérieurement au domaine (3) de l'utilisateur afin d'y être décryptées à l'aide des clés (c),
**caractérisé en ce que** des données vidéo non cryptées sont envoyées au cours de la durée de transmission, c'est-à-dire en parallèle aux étapes I, II et III.

2. Le procédé selon la revendication 1, **caractérisé en ce que** l'établissement de données cryptées (d) et de clés (c) se déroule de manière quasiment continue au cours de la durée de transmission dans la mesure où des paquets partiels de données cryptées (d) et de clés (c) se succédant dans le temps sont générés à partir de petits paquets partiels de données vidéo (b) se succédant dans le temps.

3. Le procédé selon la revendication 1 ou 2, **caractérisé en ce que** les clés (c) dans le domaine du prestataire de services sont effacées ou écrasées après l'envoi à l'utilisateur.

4. Procédé selon l'une des revendications précédentes, **caractérisé en ce que** les données cryptées (d) et clés (c) sont générées individuellement pour chaque utilisateur.

5. Procédé selon l'une des revendications 1 à 3, **caractérisé en ce qu'**un seul bloc de données cryptées (d) et de clés (c) est généré conjointement pour une majorité d'utilisateurs.

6. Procédé selon l'une des revendications précédentes, **caractérisé en ce que** la possibilité de lecture des données cryptées (d) enregistrées chez le prestataire de services est rendu dépendant de l'identité du lecteur, par ex. en liant l'envoi des clés (c) à l'obtention et à l'enregistrement d'un numéro d'identification du décodeur numérique récepteur « Set Top Box » (3.1) et en liant la lecture des données cryptées (d) à l'obtention d'un numéro d'identification du décodeur numérique récepteur « Set Top Box » (3.1) et à sa conformité au numéro d'identification de l'appareil enregistré.

7. Procédé selon l'une des revendications 1 à 5, **caractérisé en ce que** le fonctionnement des clés (c) est indépendant de l'identité de l'utilisateur.

8. Procédé selon l'une des revendications précédentes, **caractérisé en ce que** la possibilité de lecture des données cryptées (d) enregistrées chez le prestataire de services est limitée dans le temps sur une durée déterminée après l'envoi.

9. Procédé selon l'une des revendications précédentes, **caractérisé en ce que** le nombre potentiel d'opérations de lecture est limité au niveau des données cryptées (d) enregistrées auprès du prestataire de services.

10. Procédé selon l'une des revendications précédentes, **caractérisé en ce qu'**il sert à la diffusion en temps réel d'émissions de télévision par un réseau numérique.
